# EUROPÄISCHE PATENTSCHRIFT

(11) **EP 3 863 413 B1**
(45) Veröffentlichungstag und Bekanntmachung des Hinweises auf die Patenterteilung: **07.06.2023**
(21) Anmeldenummer: 19789604.6
(22) Anmeldetag: 09.10.2019
(51) Int. Cl.: A23G 1/20, A23G 3/02

(54) **VORRICHTUNG ZUM DOSIEREN EINES VERZEHRGUTS**
DEVICE FOR DOSING A CONSUMABLE PRODUCT
DISPOSITIF DE DOSAGE D'UN PRODUIT À CONSOMMER

(30) Priorität: 09.10.2018 DE 102018124828
(43) Veröffentlichungstag der Anmeldung: 18.08.2021
(73) Patentinhaber: BAYER Feinwerk GmbH & Co. KG, 78052 VS-Villingen (DE)
(72) Erfinder: HEITER, Uwe, 78609 Tuningen (DE)
(74) Vertreter: Patentanwälte und Rechtsanwalt Weiß, Arat & Partner mbB
(86) Internationale Anmeldenummer: PCT/EP2019/077280
(87) Internationale Veröffentlichungsnummer: WO 2020/074548

(56) Entgegenhaltungen:
- EP-A2- 1 145 641
- GB-A- 1 471 347
- US-A1- 2017 121 169

## Beschreibung

### Technisches Gebiet

Die Erfindung betrifft eine Vorrichtung zum Dosieren eines Verzehrguts mit einem Gehäuse, mit einem Behälter zur Aufnahme des Verzehrguts, an dessen Boden zumindest eine Auslassöffnung, vorzugsweise jedoch mehrere Auslassöffnungen in einer Reihe angeordnet ist/sind, mit mindestens einem Zylinder mit einem Kolben, mit einer Einlassöffnung und einer Auslassöffnung, wobei zum Öffnen und Schließen der Auslassöffnung des Zylinders ein auf Druck öffnendes Auslassventil im Zylinder vorgesehen ist, wobei vorzugsweise an der Auslassöffnung des Zylinders eine Spritzdüse angeordnet ist, wobei das aus dem Zylinder ragende Ende des Kolbens an einem mittels einer Antriebsvorrichtung in Richtung der Längsachse der Zylinder bewegbaren Schlitten befestigt ist und wobei unterhalb der Spritzdüsen eine Ablagefläche für Gussformen mit zu befüllenden Kavitäten vorgesehen ist.

### Stand der Technik

Eine derartige Vorrichtung zum Dosieren eines Verzehrguts ist beispielsweise aus dem deutschen Gebrauchsmuster G 82 35 850.8 U1 bekannt. Die dort offenbare Vorrichtung dient dem Befüllen von Hohlkörpern, z. B. aus Schokolade oder ähnlichen Süßwarenerzeugnissen mit einer eßbaren Füllmasse, beispielsweise einer Trüffelcreme.

Ein weiteres Beispiel ist aus EP-A-0 221 369 bekannt.

Ferner ist eine derartige Vorrichtung aus der EP 1 145 641 B1 bekannt. Die in vorbenannter Patentschrift offenbarte Vorrichtung ist flexibel einsetzbar und für Kleinbetriebe geeignet. Allerdings erlaubt sie es oftmals nicht, das im Behälter befindliche Verzehrgut auf die gewünschte Temperatur zu bringen, ohne hierbei eine unerwünschte Erhitzung von hitzeempfindlichen Teilen der Vorrichtung herbeizuführen und ohne die Gefahr von Verbrennungen für Benutzer hervorzurufen. Ferner ist eine derartige Vorrichtung oftmals teuer in der Herstellung.

### Aufgabe der Erfindung

Der vorliegenden Erfindung liegt die Aufgabe zu Grunde, die Nachteile des Stands der Technik zu überwinden.

### Lösung der Aufgabe

Die Erfindung schlägt zur Lösung der Aufgabe einen Heizblock mit einer Unterseite vor, wobei die Unterseite komplementär zu einem Abschnitt des Zylinders ausgebildet ist. Vorzugsweise ist der Heizblock von dem Gehäuse und von dem Behälter abnehmbar. Vorzugsweise umfasst die Vorrichtung mehrere Zylinder, entsprechend ist die Unterseite vorzugsweise komplementär zu entsprechenden Abschnitten dieser Zylinder ausgebildet.

Der Heizblock kann ferner eine Oberseite umfassen, welche komplementär zu einem Abschnitt des Behälters ausgebildet sein kann.

Unabhängig von der Ausgestaltung der Oberseite kann ein Teil des Heizblocks ferner komplementär zu den Auslassöffnungen ausgebildet sein.

Der Behälter der Vorrichtung ist vorzugsweise vom Gehäuse abnehmbar. An jeder Auslassöffnung des Behälters ist vorzugsweise ein auf Druck schliessendes Rückschlagventil zum Öffnen und Schliessen der Auslassöffnungen angeordnet, welche bei abgenommenem Behälter automatisch geschlossen ist. Die Einlassöffnungen des Zylinders sind mit dem Ausgang des Rückschlagventils verbunden, wobei das Rückschlagventil bei auf das Gehäuse aufgesetztem Behälter geöffnet ist und durch Eindrücken des Kolbens in den Zylinder schliessbar ist.

Abschnitte des Heizblocks, welche nicht komplementär zu den Zylindern ausgebildet sind, können von einer Isolierschicht umgeben sein. Vorteilhafterweise kann der Heizblock somit sehr energiesparend betrieben werden, da nur die Zylinder beheizt werden müssen. Der Behälter muss nicht beheizt werden, da er relativ zu der vom Verzehrgut berührten Oberfläche ein grosses Volumen aufweist. Dem Verzehrgut wird daher im Behälter nur wenig Wärme über die Wände bzw. Oberflächen des Behälters entzogen, eine Beheizung des Behälters ist daher nicht nötig. Die Situation in den Zylindern stellt sich genau umgekehrt dar: Dort ist relativ zur vom Verzehrgut berührten Oberfläche das vom Verzehrgut eingenommene Volumen viel kleiner, dem Verzehrgut wird daher in den Zylindern deutlich mehr Wärme entzogen. Aus diesem Grund werden die Zylinder beheizt.

Der Behälter kann zumindest eine Seitenwand und einen Aufnahmeraum umfassen. Der Aufnahmeraum kann einen Bodenabschnitt und zumindest einen Seitenabschnitt umfassen, wobei ein erster Abschnitt der Seitenwand den Seitenabschnitt bilden kann. Optional kann ein zweiter Abschnitt der Seitenwand eine ausserhalb des Aufnahmeraums liegende Perforation umfassen. Die Perforation verläuft somit vorzugsweise entlang einer Kontaktstelle, welche den Seitenabschnitt des Aufnahmeraums von der Seitenwand bzw. den ausserhalb des Aufnahmeraums befindlichen Abschnitten der Seitenwand trennt.

Der Behälter kann aus Edelstahl gefertigt sein. Sollte der Behälter beheizt werden, was gemäss einem Ausführungsbeispiel vorgesehen sein kann, so ist Edelstahl ein besonders vorteilhafter Werkstoff: Wenn der Behälter effektiv beheizt wird, geht weniger Wärme aus dem Verzehrgut verloren, da Edelstahl die Wärme schlechter leitet als andere Metalle.

Der Behälter kann von einem Isoliermantel umgeben sein. Dieser kann einstückig oder in Form einzelner Elemente, beispielsweise in Form einzelner Platten ausgeführt sein. Dieser Isoliermantel kann sowohl einem Wärmeverlust entgegenwirken als auch einen Benutzer vor Verbrennungen schützen.

Ferner kann ein gegenüber dem Behälter wärmeisolierter Deckel vorgesehen sein, welcher ebenfalls Wärmeverlust verhindern und Verbrennungen vorbeugen soll.

Der Heizblock kann im Wesentlichen aus Aluminium bestehen. Vorzugsweise umfasst der Heizblock jedoch eine Isolierschicht, welche nicht aus Aluminium besteht, sondern beispielsweise aus einem Vlies gefertigt sein kann. Es kann daran gedacht sein, dass eine Heizfolie, welche in Kontakt mit dem Aluminium steht, den Heizblock erwärmt. Vorzugsweise umfasst der Heizblock ein Anschlussmittel zum Anschluss an den elektrischen Strom oder an ein Steuerungsgerät.

In der Einlassöffnung des Zylinders kann ein Verbindungsrohr sitzen, auf das die Auslassöffnung bzw. die Auslassöffnungen des Behälters gesteckt ist bzw. sind. Die Unterseite des Heizblocks ist vorzugsweise komplementär zu einem Abschnitt des Zylinders bzw. der Zylinder und den Verbindungsrohren ausgebildet.

Am Boden des Behälters zur Aufnahme des Verzehrguts, der vom Gehäuse der erfindungsgemäßen Vorrichtung abnehmbar ist, sind in einer Reihe mehrere Auslassöffnungen mit je einem Rückschlagventil angeordnet. Bei abgenommenem Behälter schließen die Rückschlagventile selbsttätig, so dass im Behälter noch vorhandenes Verzehrgut nicht auslaufen kann.

Abhängig beispielsweise von einer Art eines gewünschten Verzehrprodukts, welches aus dem Verzehrgut hergestellt werden soll, kann an verschiedene Arten von Verzehrgütern gedacht sein.

Das Verzehrgut ist vorzugsweise bei Verarbeitungstemperatur fliessfähig. Beispielsweise kann es sich um flüssige Schokolade oder um ein anderes im Konditoreiwesen verwendetes flüssiges Verzehrgut handeln. Weiterhin kann auch an eine Rohmasse zur Herstellung von Bonbons, Weingummi, Fruchtgummi oder dergleichen gedacht sein. Derartige Rohmassen können Verarbeitungstemperaturen von bis zu etwa 150°C erfordern. Bei derart hohen Temperaturen, welche beispielsweise bei der Schokoladenherstellung nicht erforderlich sind, treten die Vorteile des Heizblocks und der Isolierschicht besonders deutlich zu Tage.

Das Verzehrgut kann einerseits in Kavitäten von Guss- bzw. Hohlformen eingebracht werden. Weiterhin kann daran gedacht sein, das Verzehrgut in Hohlformen oder Hohlkörpern, beispielsweise Pralinenhohlkugeln oder dergleichen, einzufüllen. Zahlreiche weitere Arten der Ausbringung des Verzehrguts sind denkbar.

Bei aufgesetztem Behälter stehen die Auslassöffnungen des Behälters mit einer Einlassöffnung je eines Zylinders in Verbindung, in dem ein Kolben geführt ist. Am Zylinderende ist eine Auslassöffnung vorgesehen, die von einem Auslassventil geöffnet und geschlossen wird, das bei Druck öffnet. Beim Aufsetzen des Behälters auf die Zylinder wird das Rückschlagventil geöffnet, so dass Verzehrgut aus dem Behälter in den Zylinder fließen kann.

Die Zylinder sind vorzugsweise einzeln zwischen auf einer Leiste angeordnete Zapfen steckbar und wieder entfernbar.

An der Auslassöffnung eines Zylinders ist eine Spritzdüse angeordnet, die vorzugsweise um die Längsachse des Zylinders schwenkbar ist. Die Spritzdüse kann mittels einer auf dem Zylinder steckenden Hülse drehbar befestigt sein. Die Hülse kann auf zwei vorgespannten O-Ringen gelagert sein, um eine Friktion zu erzeugen und um sie ohne Werkzeug lösen und verstellen zu können. Außerdem wird ein Austreten der Verzehrmasse an dieser Stelle verhindert.

Die Spritzdüse ist nicht zwingend nötig, das Verzehrgut kann auch durch die Auslassöffnung direkt in die Kavität, die Hohlkugel oder dergleichen fliessen. Anstelle der Spritzdüse kann an eine Leitung, einen Schlauch oder dergleichen gedacht sein.

Sowohl bei einer Vorrichtung mit nur einer Auslassöffnung im Boden des Behälters und einem Zylinder, als auch bei einer Vorrichtung mit mehreren Auslassöffnungen im Boden des Behälters und mehreren Zylindern kann daran gedacht sein, dass der Zylinder über mehrere Auslassöffnungen oder noch bevorzugter über eine Auslassöffnung und eine sich verzweigende Spritzdüse, eine sich verzweigende Leitung, einen sich verzweigenden Schlauch oder dergleichen verfügt.

Die aus dem Zylinder ragenden Enden der Kolben sind an einem Schlitten befestigbar. Vorzugsweise sind die Enden der Kolben mit einem Tellerrand ausgebildet, der in korrespondierende Ausnehmungen mit einer Hinterschneidung des Schlittens einsteckbar sind. In entsprechender Weise kann am Ende der Kolben auch ein Einstich vorgesehen sein, welche beispielsweise in korrespondierende Hinterschneidungen des Schlittens gehalten werden können.

Der Schlitten ist mit einer Antriebsvorrichtung in Richtung der Längsachse der Zylinder bewegbar, um die in den Zylindern steckenden Kolben zu bewegen. Der Antrieb kann von Hand oder maschinell, z.B. mittels eines Elektromotors, erfolgen.

Als Antriebsvorrichtung kann beispielsweise der in den Absätzen [0013] und [0014] der EP 1 145 641 B1 beschriebene Seilzug dienen. Alternativ kann ein Kurbeltrieb oder eine andere Anordnung als Antriebsvorrichtung dienen. Ferner kann an beliebige Antriebsvorrichtungen gedacht sein, welche eine Bewegung des Schlittens und somit der in den Zylindern steckenden Kolben bewirken können. Vorzugsweise ist die Antriebsvorrichtung so ausgelegt, dass der Schlitten möglichst ohne laterale Bewegungen, Verdrehen und Verkanten entlang der Längsrichtung bewegt wird, damit aus allen Kolbeneinheiten gleich viel Verzehrgut herauskommt.

Vorzugsweise ist ein die Kolbenbewegung begrenzender Anschlag vorgesehen. Eine weitere Ausgestaltung der erfindungsgemäßen Vorrichtung sieht vor, diesen Anschlag einstellbar zu gestalten, so dass der Hub der Kolben einstellbar ist.

Unter den Spritzdüsen ist eine Fläche vorgesehen, auf welcher Guss- bzw. Hohlformen mit zu füllenden Kavitäten, Hohlkörper wie beispielsweise Pralinenhohlkugeln oder dergleichen positioniert werden können.

Einerseits kann daran gedacht sein, beispielsweise eine Gussform oder ein Tablett oder dergleichen mit Pralinenhohlkugeln händisch zu bewegen, um hintereinander angeordnete Kavitäten bzw. Reihen von Hohlkugeln zu befüllen.

Andererseits kann daran gedacht sein, dass unter den Spritzdüsen ein Tisch angeordnet ist, der vorzugsweise in Schritten in Richtung der Längsachse der Zylinder bewegbar ist. Besonders vorteilhaft ist es, den Vortrieb des Tisches mit dem Antrieb des Schlittens zu koppeln. Es ist weiterhin vorteilhaft, die Höhe des Tisches einstellbar zu gestalten. Der Tisch dient zur Aufnahme der zu befüllenden Gussform mit Kavitäten oder zur Aufnahme der zu befüllenden Hohlkörper, beispielsweise Pralinen. Die zu befüllenden Hohlkörper oder Kavitäten können auf einer Palette oder auf einem Blister Reihen und Spalten bildend angeordnet sein.

Anhand der Figuren werden ein Ausführungsbeispiel der erfindungsgemäßen Vorrichtung sowie Einzelheiten des Ausführungsbeispieles beschrieben und erläutert.

In der Zeichnung zeigen:
Figur 1 ein Ausführungsbeispiel einer erfindungsgemäßen Vorrichtung mit abgenommenem Behälter 1 und abgenommenem Heizblock 59 in Frontansicht,
Figur 2 eine geschnittene Ansicht der Vorrichtung nach Figur 1 aus einer anderen Perspektive, wobei der Behälter 1 nicht dargestellt ist,
Figur 3 eine geschnittene Darstellung der Vorrichtung nach Figur 1 in Seitenansicht,
Figur 4 die Vorrichtung nach Figur 3 im zusammengesetzten Zustand,
Figur 5 eine Ansicht einer alternativen Vorrichtung
Figur 6 eine geschnittene Seitenansicht der alternativen Vorrichtung, in welcher Details des Kurbeltriebs und der Stellschraube 29 erkennbar sind,
Figur 7 ein Zylinderende mit einer Einlass- und Auslassöffnung, mit einem Kolben, mit einem Auslassventil und einer Spritzdüse sowie eine Auslassöffnung mit einem Rückschlagventil des Behälters getrennt vom Zylinder im Längsschnitt,
Figur 8 das Zylinderende mit der Einlass- und Auslassöffnung, mit dem Kolben, mit dem Auslassventil und der Spritzdüse sowie mit der auf die Einlassöffnung des Zylinders aufgesteckten Auslassöffnung mit dem Rückschlagventil des Behälters im Längsschnitt, beim Ansaugen des Verzehrguts aus dem Behälter,
Figur 9 das Zylinderende mit der Einlass- und der Auslassöffnung, mit dem Kolben, mit dem Auslassventil und der Spritzdüse sowie mit der auf die Einlassöffnung des Zylinders aufgesteckten Auslassöffnung mit dem Rückschlagventil des Behälters im Längsschnitt beim Auspressen des Verzehrguts aus dem Zylinder,
Figur 10 eine vergrösserte Detailansicht eines Ausschnitts der Figur 5, in
Figur 11 den Heizblock 59 mit einer Heizfolie 17,
Figuren 12 und 13 den Heizblock 59 der Vorrichtungen nach den Figuren 1 bis 4 aus verschiedenen Perspektiven und in
Figur 14 die Vorrichtung gemäss den Figuren 1 bis 4 in einer geschnittenen Seitenansicht.

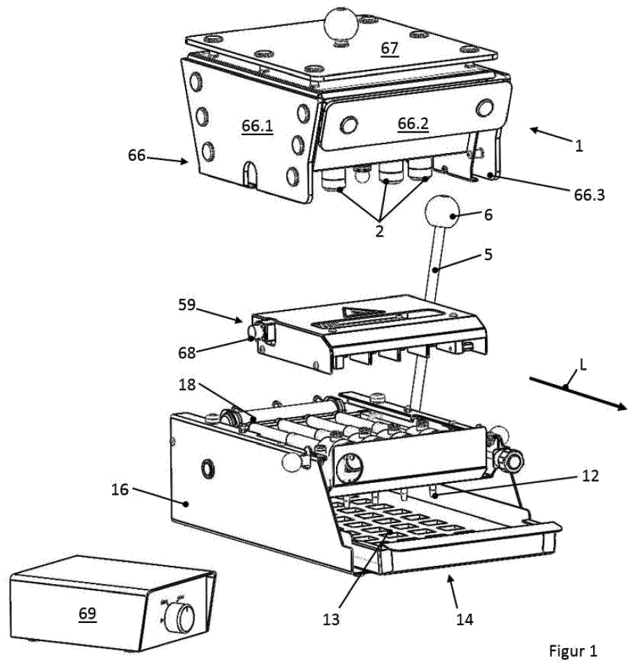

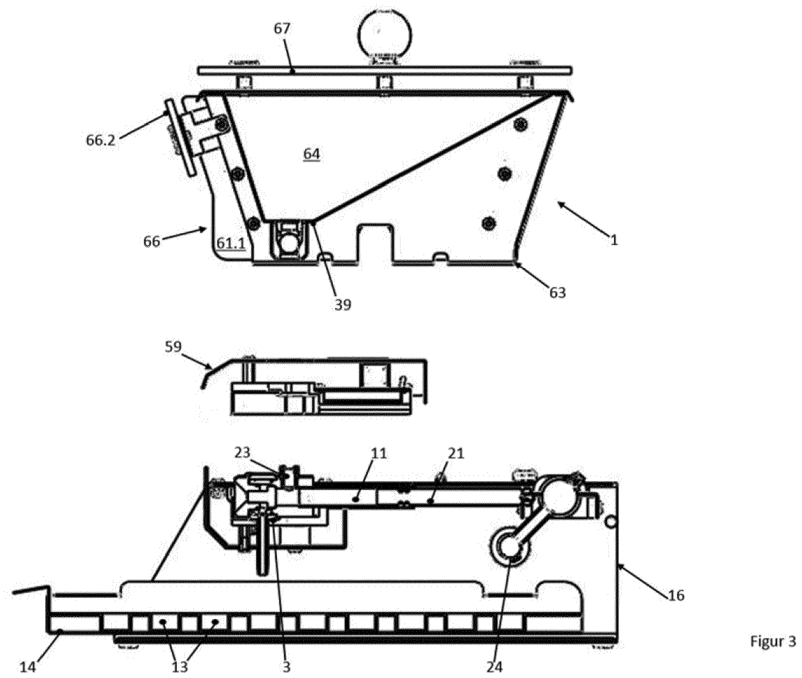

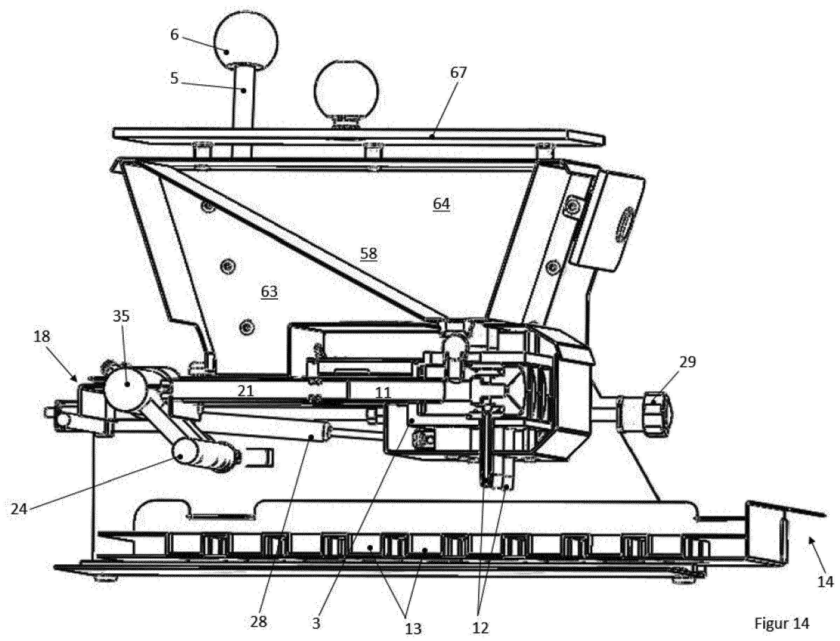

### Zur Vorrichtung gemäss den Figuren 1 bis 4 und 14:

In der Figur 1 ist ein Ausführungsbeispiel der erfindungsgemäßen Vorrichtung in perspektivischer Ansicht mit abgenommenem Heizblock 59 und abgenommenem Behälter 1 gezeigt.

Am Boden 39 eines Behälters 1, in welchem sich das Verzehrgut befindet, sind mehrere Auslassöffnungen 2 in Reihe angeordnet. Innerhalb des Gehäuses 16 sind Zylinder 11 derart unter den Auslassöffnungen 2 des Behälters 1 angeordnet, dass im zusammengebauten Zustand eine Auslassöffnung 2 mit einer oberen Einlassöffnung 23 eines Zylinders 11 verbunden ist. Am Zylinderende ist eine untere Auslassöffnung mit einer vorzugsweise schwenkbaren Spritzdüse 12 angeordnet. Unterhalb der Spritzdüsen 12 befindet sich im Gehäuse 16 eine Ablagefläche 15, auf der sich eine Gussform 14 mit den zu füllenden Kavitäten 13 befindet. Vorzugsweise wird die Ablagefläche 15 in Längsrichtung L händisch bewegt, um eine neue noch zu befüllende Reihe von Kavitäten 13 unter den Spritzdüsen 12 zu positionieren.

Durch Schwenken der Spritzdüsen 12 quer zur Längsrichtung L lässt sich die erfindungsgemäße Vorrichtung an Gussformen 14 mit unterschiedlichen Abständen zwischen den Kavitäten 13 in einer Reihe optimal anpassen.

In jeder Auslassöffnung 2 des Behälters 1 befindet sich ein in der Figur 1 nicht sichtbares Rückschlagventil, das bei abgenommenem Behälter 1 und bei fehlendem Zylinder 11 unter der Auslassöffnung 2 selbsttätig schließt, so dass aus diesen Auslassöffnungen 2 kein Verzehrgut treten kann.

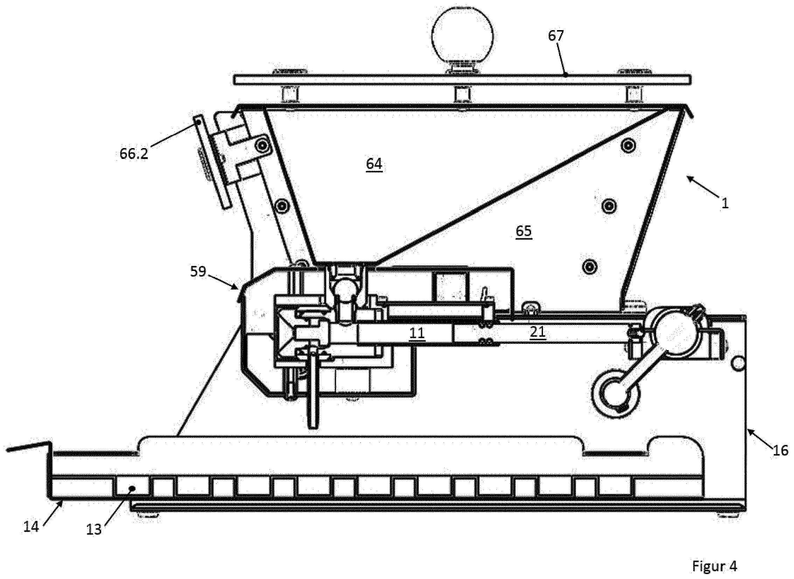

Der Heizblock 59 beheizt die Auslassöffnungen 2, die Zylinder 11 und einen Bereich um die Einlassöffnungen 23 der Zylinder 11. Dies geht insbesondere auch aus Figur 4 hervor. Um einen Benutzer vor Verbrennungen zu schützen, ist der Behälter 1 von einem Isoliermantel 66 umgeben, welcher mehrteilig ausgeführt sein kann wie in Figur 1 gezeigt. Der Isoliermantel 66 besteht somit aus einzelnen Elementen 66.1, 66.2, 66.3 Aus demselben Grund ist der Deckel 67 vorgesehen.

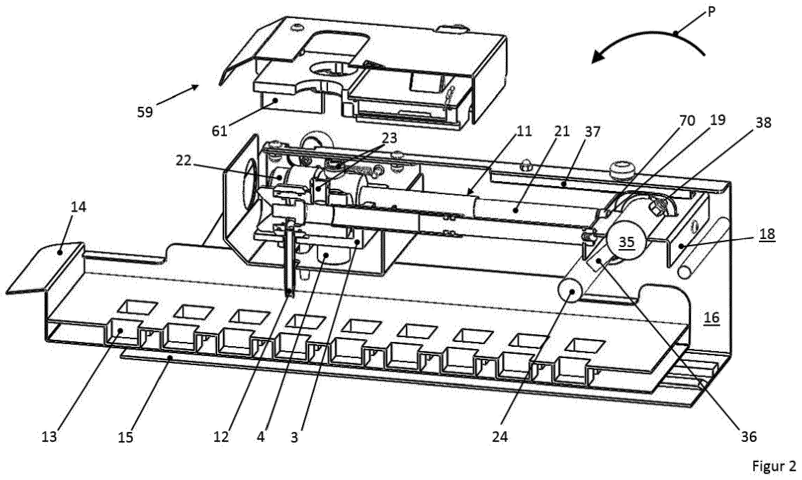

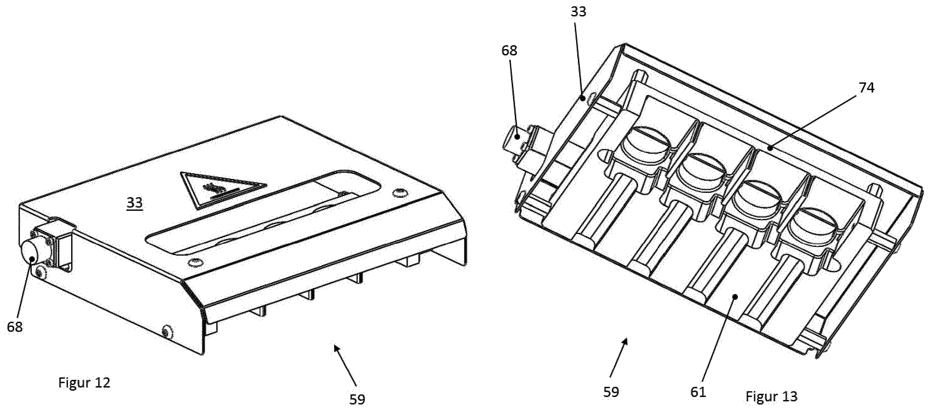

Insbesondere den Figuren 2 bis 4 und 11 bis 13 sind weitere bauliche Massnahmen zu entnehmen, welche die vom Heizblock 59 ausgehende Wärme möglichst zielgerichtet den Zylindern 11 sowie dem Abschnitt um die Einlassöffnungen 23 des Zylinders 11 zuführen sollen. Dies reduziert einerseits die Gefahr von Verbrennungen für den Benutzer und andererseits den Energieverbrauch. So ist der Heizblock 59 einerseits an den Abschnitten, an welchen keine Wärmeübertragung gewünscht ist, von einer Isolierschicht 62 umgeben. Ferner ist eine Abdeckung 33 vorgesehen, welches einerseits als Isolierung dient und andererseits einen Benutzer vor Verbrennungen schützt.

Der Heizblock 59 ist die einzige elektrische Komponente der in den Figuren gezeigten Vorrichtung und auf einfache Weise von den restlichen Komponenten und Bestandteilten der Vorrichtung trennbar. Hinsichtlich der Betriebssicherheit, beispielsweise während der Reinigung der Vorrichtung, ist es vorteilhaft, die einzige elektrische Komponente auf einfache Weise entfernen zu können.

Im Gehäuse 16 ist eine parallel zur Leiste 3 angeordnete Antriebswelle 24 drehbar gelagert. Auf der Antriebswelle 24 sind mehrere Stifte 36 angeordnet, von denen in Figur 2 nur einer zu sehen ist. Ferner ist die Antriebswelle 24 mit dem Hebel 5 (nicht dargestellt) verbunden. Ein Herunterdrücken des Hebels 5 in Richtung eines Pfeils P führt daher zu einer Rotation der Antriebswelle 24 in Richtung des Pfeils P.

Ein Gleitelement 35 ist drehbar mit dem Schlitten 18 verbunden. Der Schlitten 18 ist beidseits mit entsprechenden Eingriff-Elementen (nicht dargestellt) in einer Schiene 37 befestigt. Der Schlitten 18 ist daher zwangsgeführt und kann sich nur in Längsrichtung L hin- und her bewegen.

Das Gleitelement 35 umfasst mehrere Löcher (in Figur 2 nicht sichtbar), durch welche die Stifte 36 hindurchgesteckt und mit einer Mutter 38 gesichert sind. Das Gleitelement 35 kann daher, ausgehend von der in Figur 2 dargestellten Anordnung, an den Stiften 36 nach unten gleiten. Da das Gleitelement 35 mit dem Schlitten 18 verbunden ist, welcher wiederum in der Schiene 37 zwangsgeführt ist, führt eine Rotation der Antriebswelle 24 zu einer Bewegung des Schlittens 18 in Längsrichtung L. Da mehrere Stifte 36, vorzugsweise zwei oder drei Stifte 36, auf der Antriebswelle 24 vorhanden sind, wird ein Verkanten des Schlittens 18 effektiv vermieden.

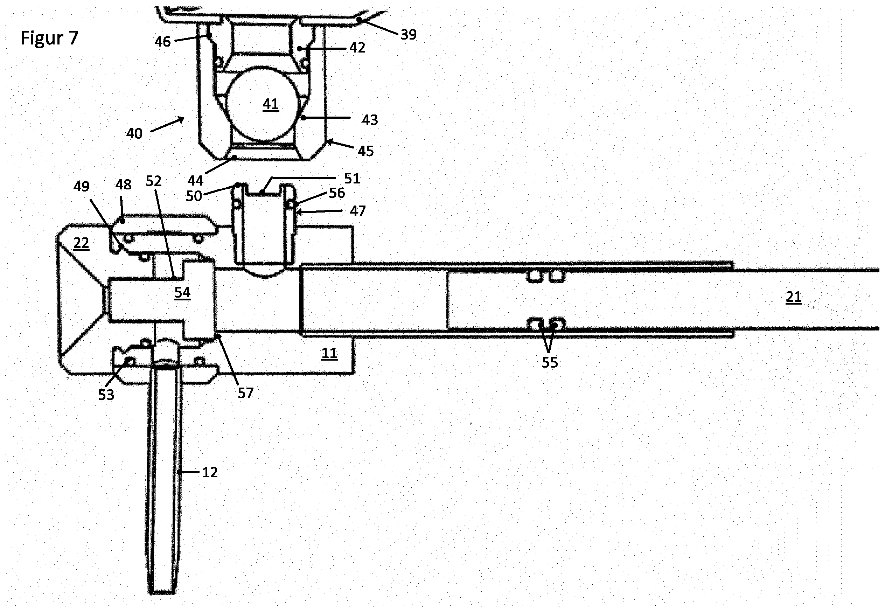

Durch Herunterdrücken dieses Hebels 5 wird somit die Antriebswelle 24 gedreht und letztlich der Schlitten 18, an dem die Enden der in den Zylindern 11 steckenden Kolben 21 befestigt sind, in Längsrichtung L nach vorne gezogen. Durch diese Bewegung, die beispielsweise von Hand, aber auch maschinell ausgeführt werden kann, werden die Kolben 21 in die Zylinder 11 gedrückt, wodurch Verzehrgut aus den Spritzdüsen 12 gedrückt wird. Dieser Vorgang wird an späterer Stelle anhand besser geeigneter Figuren - die Figuren 7 bis 9 - eingehend erläutert.

Auf der Ablagefläche 15 liegt die Gussform 14 mit den zu befüllenden Kavitäten 13. Die Zylinder 11, die an ihrem vorderen Ende mit einer Kappe 22 verschlossen sind, liegen auf einer Leiste 3 zwischen jeweils zwei Zapfen 4 gesteckt auf. Rechts und links ist an den Zylindern 11 eine komplementär zu den Zapfen 4 ausgebildete Aussparung eingearbeitet, so dass die Zylinder 11 fest fixiert sind. Aus dem hinteren Ende der Zylinder 11 ragen Kolben 21, deren Ende 70 tellerförmig ausgebildet ist. Die Enden 70 der Kolben 21 stecken in korrespondierenden Ausnehmungen 19 des Schlittens 18, welche eine Hinterschneidung zur Fixierung des Endes 70 umfassen.

Ein wesentlicher Vorteil liegt nun darin, dass jeder Zylinder 11 zwischen zwei Zapfen 4 auf die Leiste 3 und das tellerförmige Ende 70 des Kolbens 21 in die korrespondierende Ausnehmung 19 mit der Hinterschneidung des Schlittens 18 einsteckbar sind. Dadurch lassen sich die Zylinder 11 mit den Kolben 21 leicht in die Vorrichtung einsetzen und auch wieder entnehmen. Wie bereits erwähnt, lassen sich die Anzahl der Zylinder 11 und deren Verteilung auf der Leiste 3 beliebig wählen.

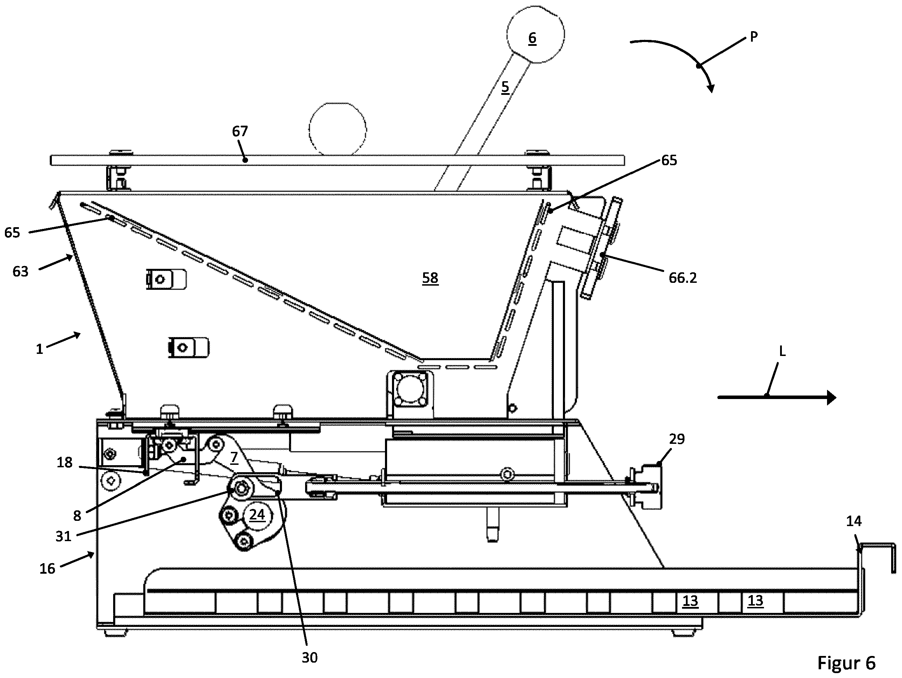

Am Gehäuse 16 ist seitlich eine Stellschraube bzw. Verstellrädchen 29 erkennbar. Insbesondere der Figur 6 ist zu entnehmen, wie mittels dieser Stellschraube 29 ein als Anschlag dienendes Längsloch 30 in oder entgegen der Längsrichtung L verstellt wird. Das Längsloch 30 bildet einen Anschlag für einen Bolzen bzw. eine Schraube 31, welche an dem ersten Mitnehmerelement 7 festgelegt ist. Hierbei begrenzt das Längsloch 30 die Bewegung des Bolzens bzw. der Schraube 31 und somit des Kolbens 21 entgegen der Längsrichtung L und dient somit als hinterer Anschlag. Über die Stellschraube 29 wird somit letztlich der Kolbenhub bzw. die Füllmenge des Zylinders 11 eingestellt. Je weiter das Längsloch 30 in Längsrichtung L verschoben ist, desto geringer ist die Füllmenge des Zylinders 11.

Die Funktion der Stellschraube 29 in der Vorrichtung nach den Figuren 1 bis 3 und 14 ist analog der vorstehend für die alternative Vorrichtung gemäss Figur 6 beschriebenen.

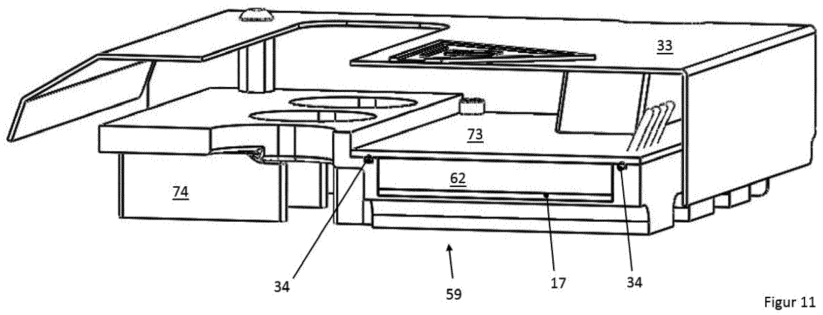

In Figur 11 ist der Heizblock 59 mit der Heizfolie 17 dargestellt, welche in den übrigen Figuren der Übersicht halber nicht gezeigt ist. Die Heizfolie 17 liegt an einem Aluminiumkern 74 des Heizblocks 59 direkt an und ist gegen äussere Einflüsse geschützt. Die Heizfolie 17 erwärmt den Aluminiumkern 74 des Heizblocks. Die Heizfolie 17 wird über das beispielsweise in Figur 1 dargestellte Anschlussmittel 68, welches in Figur 11 nicht zu erkennen ist, mit Strom versorgt. Die O-Ringe 34 sorgen für eine fluid-dichte Isolation, welche gemeinsam mit dem Wandungselement 73 die Heizfolie 17 schützen.

In der Figur 7 sind eine Auslassöffnung mit einem Rückschlagventil des Behälters 1 sowie darunter ein Zylinder 11 im Längsschnitt gezeigt. Der Behälter 1 ist vom Zylinder 11 abgenommen.

Im Boden 39 des Behälters 1 ist in einer Öffnung ein oberer Ventilsitz 42 befestigt, an dem, z.B. mittels eines Gewindes 46, ein Ventilrohr 45 mit einem unteren Ventilsitz 43 befestigt ist. Zwischen dem oberen Ventilsitz 42 und dem unteren Ventilsitz 43 befindet sich eine Kugel 41, die infolge der Schwerkraft und des sich im Behälter befindenden Verzehrguts dicht auf dem unteren Ventilsitz 43 aufliegt, so dass kein Verzehrgut aus dem Behälter auslaufen kann. Die beiden Ventilsitze 42 und 43 sowie die Kugel 41 bilden das Rückschlagventil. Das Rückschlagventil ist somit als Kugelventil ausgeführt.

Unterhalb des Rückschlagventils ist in der Figur 7 passgenau der Zylinder 11 mit dem Kolben 21 im Längsschnitt dargestellt.

In einer Einlassöffnung des Zylinders 11 sitzt ein Verbindungsrohr 47 mit einem Kugelsitz 50 für die Kugel 41, das von einem Dichtring 56 zur Abdichtung umfasst ist. Am Kugelsitz 50 ist eine Überbrückung 51 vorgesehen, so dass die Kugel 41 das Verbindungsrohr 47 nicht vollständig verschließt. Auf das Zylinderende ist eine Hülse 48 mit der Spritzdüse 12 aufgesteckt. Die Hülse 48 ist auf zwei vorgespannten O-Ringen 53 gelagert, damit die Spritzdüse 12 schwenkbar ist. Das Zylinderende ist mit einer Kappe 22 verschlossen, die mittels eines Gewindes 49 mit dem Zylinder 11 verschraubt ist. Es handelt sich somit um eine abnehmbare Kappe 22, welche vorzugsweise ein Aussengewinde aufweist, das mit einem Innengewinde 49 des Zylinders 11 verschraubt ist. Zwischen dem Ende des Zylinders 11 und dem Verbindungsrohr 47 ist im Zylinder 11 ein Anschlag 57 für einen Gummikolben 54 eingearbeitet, der zwischen diesem Anschlag 57 und der Kappe 22 angeordnet ist. Im drucklosen Zustand des Zylinders 11 drückt die eine Stirnseite des Gummikolbens 54 gegen den Anschlag 57, während die andere Stirnseite gegen die Kappe 22 drückt. Der Anschlag 57, der Gummikolben 54 und die Kappe 22 bilden das Auslassventil 52 des Zylinders 11. Somit ist das Auslassventil 52 als elastisches Ventil 54 aus einem elastischen Werkstoff hergestellt.

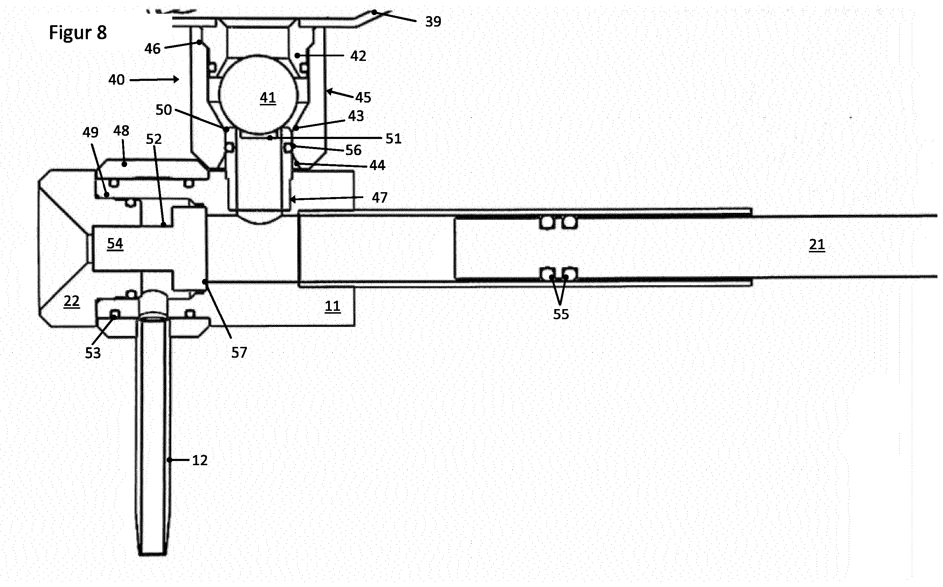

In der Figur 8 ist das Ventilrohr 45 auf das Verbindungsrohr 47 aufgesetzt, wie es bei aufgesetztem Behälter der Fall ist. Die Kugel 41 wird vom Kugelsitz 50 angehoben, jedoch nicht gegen den oberen Ventilsitz 42 gedrückt. Es kann deshalb Verzehrgutaus dem Behälter um die Kugel 41 herum - wie durch die Pfeile angedeutet ist - in das Verbindungsrohr 47 und von da weiter in den Zylinder 11 fließen. Durch Zurückziehen des Kolbens 21 wird infolge der Sogwirkung Verzehrgut in den Zylinder 11 gesaugt. Weil die eine Stirnseite des Gummikolbens 54 gegen den Anschlag 57 drückt, ist das Auslassventil 52 des Zylinders 11 geschlossen, so dass kein Verzehrgut aus der Spritzdüse 12 austreten kann.

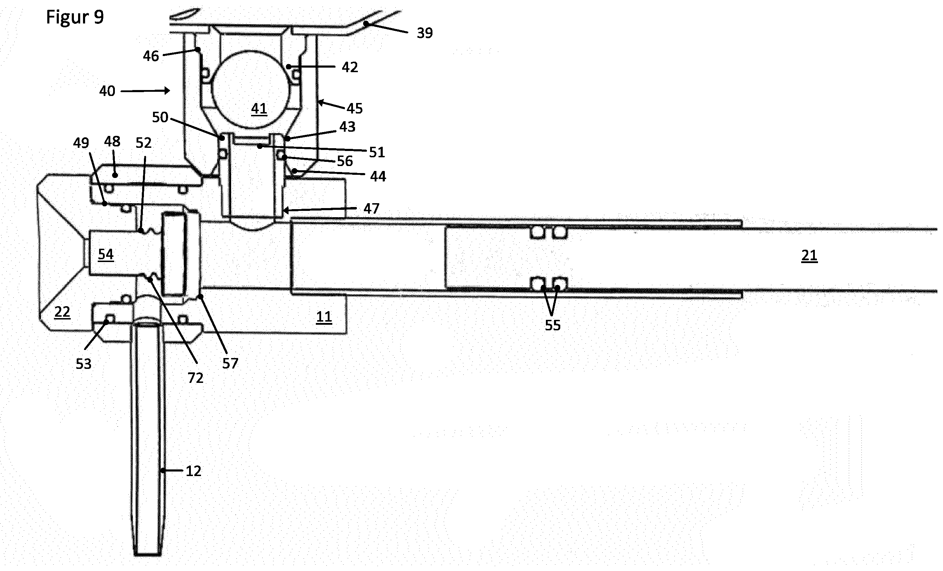

In der Figur 9 ist dargestellt, wie das Verzehrgut aus dem Zylinder 11 gepresst wird.

Hierzu wird der Kolben 21 durch Drehen des Hebels 5 mittels des Schlittens 18 in den Zylinder 11 gedrückt, wobei ein Druck entsteht, der die Kugel 41 gegen den oberen Ventilsitz 42 drückt, so dass der Behälter gegen den Zylinder abgedichtet ist. Es kann daher weder Verzehrgut vom Behälter 1 in den Zylinder 11 fließen noch vom Zylinder 11 zurück in den Behälter 1 strömen. Gleichzeitig wird von dem unter Druck stehenden Verzehrgut der Gummikolben 54 gegen die Kappe 22 gedrückt, so dass das Verzehrgut aus dem Zylinder in die Spritzdüse 12 fließt, an deren Ende das Verzehrgutaustritt und in die zu befüllenden Kavitäten fließt. Ein Zusammendrücken des Gummikolbens 54 ist in Figur 9 durch Ausstülpungen 72 angedeutet. Am Ende des Füllvorgangs wird der Hebel 5 entweder losgelassen oder vom Benutzer entgegen der Pfeilrichtung P in eine ursprüngliche Position, wie beispielsweise in Figur 6 gezeigt, zurückbewegt. Wird der Hebel 5 losgelassen, so bewirkt die Gasdruckfeder 28, welche bei einer Bewegung des Schlittens 18 in Längsrichtung L komprimiert wurde, dass der Schlitten 18 entgegen der Längsrichtung L in eine zurückgefahrene Position bewegt wird. Da der Schlitten 18 und der Hebel 5 über den Kurbeltrieb miteinander in Wirkverbindung stehen, kann auch der Hebel 5 nach einem Loslassen in einer heruntergedrückten Position allein durch eine Federkraft der Gasdruckfeder 28 in die ursprüngliche Position zurückbewegt werden. Ferner kann der Hebel 5 alternativ oder unterstützend auch händisch in die ursprüngliche Position zurückbewegt werden. Sobald die Bewegung des Hebels 5 und gleichzeitig des mit ihm über den Kurbeltrieb in Verbindung stehenden Kolbens 21 in Richtung der ursprünglichen Position einsetzt, wird auch der Gummikolben 54 von der in Figur 9 dargestellten gestauchten bzw. zusammengedrückten Position schlagartig in seine ursprüngliche Position zurückbewegt, so dass er am Anschlag 57 anliegt wie in den Figuren 7 und 8 gezeigt. Somit reisst auch der Verzehrgutstrom am Ende der Spritzdüsen 12 sauber ab. Das bedeutet, sobald die entsprechende Bewegung des Hebels 5 bzw. des Kolbens 21 in Richtung der ursprünglichen Position einsetzt, dehnt sich der Gummikolben 54 wieder aus und verschließt am Anschlag 57 den Zylinder. Durch das Ausdehnen des Gummikolbens 54 entsteht in der Spritzdüse 12 ein Sog, der ein sauberes Abreissen des Verzehrgutstromes am Ende der Auslaufdüse 12 bewirkt. Auf diese Weise wird ein Nachtropfen dem Verzehrgut wirkungsvoll verhindert.

Die lichte Weite des Zylinders nimmt von aussen nach innen bzw. von dem mit der Kappe 22 verschlossenen Ende nach hinten hin ab. Es sind keine Hinterschneidungen vorhanden. Aus diesen Gründen lässt sich der Zylinder leicht und gründlich bei abgenommener Kappe 22 reinigen.

Im Behälter 1 können Trennwände zwischen den Auslassöffnungen 2 vorgesehen sein. Diese Trennwände ermöglichen es, den Behälter mit unterschiedlichen Verzehrgütern zu füllen, um in einem Arbeitsgang Hohlkörper oder Kavitäten mit unterschiedlichen Verzehrgütern zu befüllen. Durch Schwenken zweier benachbarter Spritzdüsen gegeneinander, können Hohlkörper oder Kavitäten in einem Arbeitsgang sogar mit zwei verschiedenen Verzehrgütern befüllt werden.

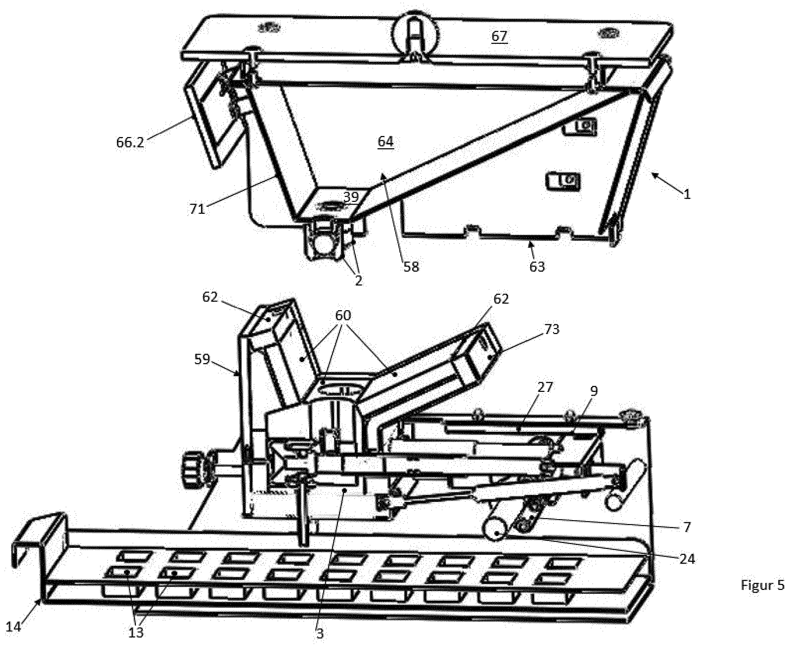

### Zur alternativen Vorrichtung gemäss den Figuren 5, 6 und 10:

Die in den Figuren 5, 6 und 10 dargestellte alternative Vorrichtung umfasst im Wesentlichen dieselben Vorteile, welche bereits mit Hinblick auf die Figuren 1 bis 4 beschrieben wurden.

Die in den Figuren 5 und 6 dargestellte alternative Vorrichtung unterscheidet sich von der in den Figuren 1 bis 4 und 14 dargestellten Vorrichtung einerseits hinsichtlich des Heizblocks 59 und andererseits hinsichtlich des Mechanismus, welcher die Rotationsbewegung der Antriebswelle 24 in eine Linearbewegung des Schlittens 18 umwandelt.

Nachfolgend wird nur auf Besonderheiten der alternativen Vorrichtung gemäss den Figuren 5 und 6 hingewiesen.

Der Heizblock 59 beheizt neben den Auslassöffnungen 2, dem Bereich um die Einlassöffnungen 23 und den Zylindern 11 auch den Behälter 1. Hierbei ist der Heizblock so gestaltet, dass seine Oberseite 60 sowohl den Boden 39 des Behälters als auch die an den Boden 39 angrenzenden Wandungselemente 71 des Behälters 1 und somit auch das im Behälter 1 befindliche Verzehrgut effektiv erhitzt.

Ferner findet eine Wärmeübertragung von der Oberseite 60 des Heizblocks 59 auf den Behälter 1 nur über diejenigen Abschnitte statt, an welchen der Boden 39 und Wandungselemente 71 des Behälters 1 mit der Oberseite 60 in direktem Kontakt stehen. Diejenigen Abschnitt der Seitenwände 63, welche nicht in Form der Seitenabschnitte 64 Wandungen des Behälters 1 bereitstellen, sind von letzteren durch eine Perforation 65 getrennt, welche einen Wärmeübergang deutlich minimiert. Somit erwärmt der Heizblock 59 vornehmlich die mit seiner Oberseite 60 in Kontakt stehenden Wandungselemente 71 des Behälters und über die Erwärmung des Verzehrguts auch die Seitenabschnitte 64, nicht jedoch die Abschnitte der Seitenwände 63 jenseits der Perforation 65.

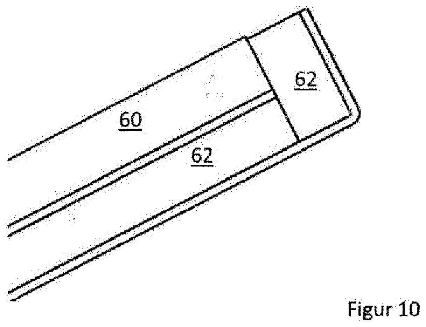

Aus den Figuren 5 und 10 geht hervor, dass die Oberseite 60 des Heizblocks 59 nicht bündig mit angrenzenden Oberflächen der Isolierschicht 62 abschliesst. Insbesondere die Detailansicht nach Figur 10 zeigt, dass die Oberseite 60 die angrenzende Oberfläche der Isolierschicht 62 etwas überragt. Somit ist sichergestellt, dass die gesamte Oberseite 60 flächig mit der Wandung des Behälters 1 in Kontakt tritt.

Im Gehäuse 16 ist eine parallel zur Leiste 3 angeordnete Antriebswelle 24 drehbar gelagert. Am rechten und am linken Ende der Antriebswelle 24 ist je ein erstes Mitnehmerelement 7 befestigt, welches einends die Antriebswelle 24 umschliesst und andernends gelenkig bzw. drehbar mit einem zweiten Mitnehmerelement 8 verbunden ist, welches wiederum am Schlitten 18 festgelegt ist. Insbesondere aus Figur 6 geht hervor, dass eine Bewegung des Hebels 5 in Richtung eines Pfeils P zu einer entsprechenden Rotation der Antriebswelle 24 führt, wodurch wiederum das drehfest auf der Antriebswelle 24 sitzende erste Mitnehmerelement 7 über die Verbindung mit dem zweiten Mitnehmerelement 8 eine Bewegung des Schlittens 18 in Längsrichtung L verursacht. Hierbei gleiten die Schlittenenden 9 innerhalb des Schlitzes 27. Die Mitnehmerelemente 7, 8 bilden somit gemeinsam mit der Antriebswelle 24 einen Kurbeltrieb. Obwohl dies aus den Figuren aus Gründen der Perspektive nicht hervorgeht sei hervorgehoben, dass vorzugsweise zwei Kurbeltriebe im Inneren der Gehäuses 16, links und rechts jeweils endseitig auf der Antriebswelle 24 aufsitzen. Diese Anordnung zweier Kurbeltriebe stellt sicher, dass der Schlitten 18 möglichst ohne laterale Bewegungen senkrecht zur Längsrichtung L, Verdrehen und Verkanten entlang der Längsrichtung L beweglich ist.

Weiterhin ist die Heizfolie 17 von einem Wandungselement 73 umgeben.

### Für sämtliche in den Figuren gezeigten Vorrichtungen gilt das folgende:

Wie bereits erwähnt, ist die erfindungsgemäße Vorrichtung zum Befüllen von Kavitäten oder eßbaren Hohlkörpern, wie z. B. Pralinen, Schokoladeneier und dergleichen, mit einem eßbaren Verzehrgut geeignet, deren Viskosität breiig, cremig, zähflüssig oder auch leichtflüssig sein kann. Als eine Auswahl an Beispielen für die Verzehrgut seien Schokolade, Sahne-Trüffelmasse, Weingummi, Bonbonmasse, Marzipan, Creme, Honig, Likör, Schnaps oder Fruchtsaft genannt.

Auch eine Anwendung der Erfindung im kosmetischen Bereich ist denkbar. So kann z.B. eine kosmetische Creme, Paste, Milch, Flüssigkeit, Parfüm, Öl, Lotion oder ähnliches dosiert in die Hohlkörper oder in die Kavitäten gefüllt werden.

Zusammenfassend sind die wesentlichen Vorteile der erfindungsgemäßen Vorrichtung zum Befüllen von Hohlkörpern oder Kavitäten aufgezählt.

Der Behälter der Vorrichtung kann jederzeit abgenommen werden, um das Verzehrgut z.B. in einem Kühlschrank zu kühlen oder in einem Wärmeschrank zu erwärmen oder um einen anderen Behälter mit einem anderen Verzehrgut aufzusetzen. Alle das Verzehrgut aufnehmenden und leitenden Teile der Vorrichtung - der Behälter, die Zylinder, die Kolben und die Spritzdüsen - sind ohne Werkzeuge voneinander trennbar. Ausserdem sind diese Teile so gestaltet - keine Hinterschneidungen im Zylinder -, dass sie leicht zu reinigen sind. Weil die Zylinder einzeln abnehmbar sind, lässt sich die erfindungsgemäße Vorrichtung mit nur wenigen Handgriffen an Hohlkörper oder Kavitäten unterschiedlicher Größe anpassen. Weil die Spritzdüsen schwenkbar sind, ist eine optimale Anpassung beim Befüllen der Hohlkörper an Blister oder Paletten mit unterschiedlichen Spaltenabständen möglich. Entsprechendes gilt für Gussformen und dergleichen mit unterschiedlich grossen Kavitäten, welche untereinander unterschiedliche Abstände aufweisen können. Es kann ein Hohlkörper oder eine Kavität mittels zweier Spritzdüsen befüllt werden. Wegen der Trennwände im Behälter können in einem Arbeitsgang Hohlkörper oder Kavitäten mit unterschiedlichen Verzehrgütern befüllt werden. Wegen der schwenkbaren Spritzdüsen kann ein Hohlkörper oder eine Kavität auch mit zwei unterschiedlichen Verzehrgütern befüllt werden.

Die erfindungsgemäße Vorrichtung kann sehr leicht von angelerntem Personal bedient werden. Ausserdem ist sie ergonomisch so gestaltet, dass ein nahezu ermüdungsfreies Arbeiten erzielt wird. Anstelle des Antriebes von Hand kann ein maschineller Antrieb, z.B. ein Elektromotor, ein Hydraulik- oder ein Pneumatikzylinder vorgesehen sein.

Trotz der zahlreichen Vorteile zeichnet sich die erfindungsgemäße Vorrichtung durch geringe Herstellungskosten aus, so dass sie besonders gut für Kleinbetriebe geeignet ist.

### Es sind zahlreiche Abwandlungen der in den Figuren gezeigten Varianten und Ausführungsformen denkbar:

So kann die Perforation 65 bei jeder denkbaren Ausführungsform vorgesehen sein oder weggelassen werden.

**Bezugszeichenliste**

| | | | | | |
|---|---|---|---|---|---|
| 1 | Behälter | 34 | O-Ring | 67 | Deckel |
| 2 | Auslassöffnung | 35 | Gleitelement | 68 | Anschlussmittel |
| 3 | Leiste | 36 | Stift | 69 | Steuerungsgerät |
| 4 | Zapfen | 37 | Schiene | 70 | Ende |
| 5 | Hebel | 38 | Mutter | 71 | Wandungselement |
| 6 | Handgriff | 39 | Boden des Behälters | 72 | Ausstülpungen |
| 7 | erstes Mitnehmerelement | 40 | Rückschlagventil | 73 | Wandungselement |
| 8 | zweites Mitnehmerelement | 41 | Kugel | 74 | Aluminiumkern |
| 9 | Schlittenende | 42 | Oberer Ventilsitz | | |
| 10 | | 43 | Unterer Ventilsitz | | |
| 11 | Zylinder | 44 | Auslassöffnung | | |
| 12 | Spritzdüse | 45 | Ventilrohr | | |
| 13 | Kavität | 46 | Gewinde | | |
| 14 | Gussform | 47 | Verbindungsrohr | | |
| 15 | Ablagefläche | 48 | Hülse | | |
| 16 | Gehäuse | 49 | Gewinde | | |
| 17 | Heizfolie | 50 | Kugelsitz | | |
| 18 | Schlitten | 51 | Überbrückung | | |
| 19 | Ausnehmung | 52 | Auslassventil | | |
| 20 | | 53 | O-Ring | | |
| 21 | Kolben | 54 | Gummikolben | | |
| 22 | Kappe | 55 | Dichtring | | |
| 23 | Einlassöffnung | 56 | Dichtring | | |
| 24 | Antriebswelle | 57 | Anschlag | | |
| 25 | | 58 | Aufnahmeraum | | |
| 26 | | 59 | Heizblock | | |
| 27 | Schlitz | 60 | Oberseite | | |
| 28 | Gasdruckfeder | 61 | Unterseite | | |
| 29 | Stellschraube | 62 | Isolierschicht | | |
| 30 | Längsloch | 63 | Seitenwand | | |
| 31 | Bolzen/Schraube | 64 | Seitenabschnitt | | |
| 32 | | 65 | Perforation | L | Längsrichtung |
| 33 | Abdeckung | 66 | Isoliermantel | P | Pfeil |

## Patentansprüche

1. Vorrichtung zum Dosieren eines Verzehrguts
mit einem Gehäuse (16) mit einem Behälter (1) zur Aufnahme des Verzehrguts,
umfassend einen Aufnahmeraum (58), an dessen Boden (39) zumindest eine Auslassöffnung (2) angeordnet ist,
mit mindestens einem Zylinder (11) mit einem Kolben (21),
mit einer Einlassöffnung (23) und einer Auslassöffnung,
wobei zum Öffnen und Schließen der Auslassöffnung des Zylinders (11) ein auf Druck öffnendes Auslassventil (52) im Zylinder (11) vorgesehen ist,
wobei das aus dem Zylinder (11) ragende Ende des Kolbens (21) an einem mittels einer Antriebsvorrichtung in Richtung der Längsachse der Zylinder (11) bewegbar ist,
**gekennzeichnet durch**
einen Heizblock (59) mit einer Unterseite (61),
die Unterseite (61) komplementär zu einem Abschnitt des Zylinders (11) ausgebildet ist,
wobei der Heizblock (59) von dem Gehäuse (16) und von dem Behälter (1) abnehmbar ist.

2. Vorrichtung nach Anspruch 1, **dadurch gekennzeichnet, dass** Abschnitte des Heizblocks, welche nicht komplementär zu den Zylindern (11) ausgebildet sind, von einer Isolierschicht (62) umgeben sind.

3. Vorrichtung nach zumindest einem der vorhergehenden Ansprüche, **dadurch gekennzeichnet, dass** der Behälter (1) zumindest eine Seitenwand (63) umfasst, und dass der Aufnahmeraum (58) den Boden (39) und zumindest einen Seitenabschnitt (64) umfasst, wobei ein erster Abschnitt der Seitenwand (63) den Seitenabschnitt (64) bildet und wobei ein zweiter Abschnitt der Seitenwand (63) eine ausserhalb des Aufnahmeraums liegende Perforation (65) umfasst.

4. Vorrichtung nach zumindest einem der vorhergehenden Ansprüche, **dadurch gekennzeichnet, dass** der Behälter (1) aus Edelstahl gefertigt ist.

5. Vorrichtung nach zumindest einem der vorhergehenden Ansprüche, **dadurch gekennzeichnet, dass** der Behälter (1) von einem Isoliermantel (66) umgeben ist.

6. Vorrichtung nach zumindest einem der vorhergehenden Ansprüche, **gekennzeichnet durch** einen gegenüber dem Behälter wärmeisolierten Deckel (67).

7. Vorrichtung nach zumindest einem der vorhergehenden Ansprüche, **dadurch gekennzeichnet, dass** der Heizblock im Wesentlichen aus Aluminium besteht.

8. Vorrichtung nach zumindest einem der vorhergehenden Ansprüche, **dadurch gekennzeichnet, dass** der Heizblock ein Anschlussmittel (68) zum Anschluss an den elektrischen Strom oder an ein Steuerungsgerät (69) umfasst.

9. Vorrichtung nach einem der vorangehenden Ansprüche,
**dadurch gekennzeichnet, dass** in der Einlassöffnung des Zylinders (11) ein Verbindungsrohr (47) sitzt, auf das die Auslassöffnung (2) bzw. die Auslassöffnungen des Behälters (1) gesteckt ist bzw. sind, wobei die Unterseite (61) des Heizblocks komplementär zu einem Abschnitt des Zylinders (11) und den Verbindungsrohren (47) ausgebildet ist.

10. Vorrichtung nach zumindest einem der vorangehenden Ansprüche, **dadurch gekennzeichnet, dass** der Heizblock (59) eine Oberseite (60) umfasst, welche komplementär zu einem Abschnitt des Behälters (1) ausgebildet ist.

## Claims

1. Device for dosing a foodstuff
having a housing (16) with a container (1) for holding the foodstuff,
comprising a receiving space (58), at a bottom (39) of which at least one outlet opening (2) is arranged,
with at least one cylinder (11) with a piston (21),
with an inlet opening (23) and an outlet opening,
wherein an outlet valve (52) opening upon pressure is provided in the cylinder (11) for opening and closing the outlet opening of the cylinder (11),
wherein the end of the piston (21) protruding from the cylinder (11) is movable on a drive device in the direction of the longitudinal axis of the cylinder (11),
**characterized by**
a heating block (59) having a bottom side (61),
the bottom side (61) is complementary to a portion of the cylinder (11),
wherein the heating block (59) is removable from the housing (16) and from the container (1).

2. Device according to claim 1, **characterized in that** sections of the heating block which are not complementary to the cylinders (11) are surrounded by an insulating layer (62).

3. Device according to at least one of the preceding claims, **characterized in that** the container (1) comprises at least one side wall (63), and **in that** the receiving space (58) comprises the bottom (39) and at least one side portion (64), wherein a first portion of the side wall (63) forms the side portion (64) and wherein a second portion of the side wall (63) comprises a perforation (65) located outside the receiving space.

4. Device according to at least one of the preceding claims, **characterized in that** the container (1) is made of high grade steel.

5. Device according to at least one of the preceding claims, **characterized in that** the container (1) is surrounded by an insulating jacket (66).

6. Device according to at least one of the preceding claims, **characterized by** a lid (67) which is thermally insulated with respect to the container.

7. Device according to at least one of the preceding claims, **characterized in that** the heating block consists essentially of aluminum.

8. device according to at least one of the preceding claims, **characterized in that** the heating block comprises connection means (68) for connection to the electric current or to a control device (69).

9. Device according to any of the preceding claims, **characterized in that** a connecting tube (47) is seated in the inlet opening of the cylinder (11), onto which the outlet opening (2) or outlet openings of the container (1) is or are plugged, the bottom side (61) of the heating block being formed complementary to a portion of the cylinder (11) and the connecting tubes (47).

10. Device according to at least one of the preceding claims, **characterized in that** the heating block (59) comprises an top side (60) which is complementary to a portion of the container (1).

## Revendications

1. Dispositif permettant le dosage d'un produit à consommer
comportant un boîtier (16) comportant un récipient (1) destiné à recevoir le produit à consommer,
comprenant un espace de réception (58) au niveau du fond (39) duquel est aménagée au moins une ouverture de sortie (2),
comportant au moins un cylindre (11) comportant un piston (21),
comportant une ouverture d'entrée (23) et une ouverture de sortie,
dans lequel une soupape de sortie (52) s'ouvrant par pression est prévue dans le cylindre (11) pour l'ouverture et la fermeture de l'ouverture de sortie du cylindre (11),
dans lequel l'extrémité du piston (21), laquelle fait saillie hors du cylindre (11), peut être déplacée, en direction de l'axe longitudinal, sur l'un des cylindres (11) à l'aide d'un dispositif d'entraînement,
**caractérisé par**
un bloc chauffant (59) comportant une face inférieure (61),
la face inférieure (61) est réalisée de façon complémentaire à une section du cylindre (11),
dans lequel le bloc chauffant (59) peut être détaché du boîtier (16) et du récipient (1).

2. Dispositif selon la revendication 1, **caractérisé en ce que** des sections du bloc chauffant, lesquelles ne sont pas réalisées de façon complémentaire aux cylindres (11), sont entourées d'une couche isolante (62).

3. Dispositif selon au moins l'une quelconque des revendications précédentes, **caractérisé en ce que** le récipient (1) comprend au moins une paroi latérale (63), et **en ce que** l'espace de réception (58) comprend le fond (39) et au moins une section latérale (64), une première section de la paroi latérale (63) formant la section latérale (64) et une seconde section de la paroi latérale (63) comprenant une perforation (65) située à l'extérieur de l'espace de réception.

4. Dispositif selon au moins l'une quelconque des revendications précédentes, **caractérisé en ce que** le récipient (1) est fabriqué en acier inoxydable.

5. Dispositif selon au moins l'une quelconque des revendications précédentes, **caractérisé en ce que** le récipient (1) est entouré d'une enveloppe isolante (66).

6. Dispositif selon au moins l'une quelconque des revendications précédentes, **caractérisé par** un couvercle (67) à isolation thermique faisant face au récipient.

7. Dispositif selon au moins l'une quelconque des revendications précédentes, **caractérisé en ce que** le bloc chauffant est sensiblement constitué d'aluminium.

8. Dispositif selon au moins l'une quelconque des revendications précédentes, **caractérisé en ce que** le bloc chauffant comprend un moyen de raccordement (68) pour le raccordement au courant électrique ou à un appareil de commande (69).

9. Dispositif selon l'une quelconque des revendications précédentes,
**caractérisé en ce que**, dans l'ouverture d'entrée du cylindre (11), se trouve un tuyau de liaison (47) sur lequel est enfichée ou sont enfichées l'ouverture de sortie (2) ou les ouvertures de sortie du récipient (1), la face inférieure (61) du bloc chauffant étant réalisée de façon complémentaire à une section du cylindre (11) et aux tuyaux de liaison (47).

10. Dispositif selon au moins l'une quelconque des revendications précédentes, **caractérisé en ce que** le bloc chauffant (59) comprend une face supérieure (60), laquelle est réalisée de façon complémentaire à une section du récipient (1).
